# EUROPEAN PATENT APPLICATION

(11) **EP 2 505 552 A1**
(43) Date of publication of application: **03.10.2012**
(21) Application number: 10833183.6
(22) Date of filing: 22.11.2010
(51) Int. Cl.: C01B 25/45, H01M 4/58

(54) **PROCESS FOR PRODUCTION OF PHOSPHORIC ACID COMPOUND, AND PROCESS FOR PRODUCTION OF SECONDARY BATTERY**

(30) Priority: 24.11.2009 JP 2009266372
(71) Applicant: Asahi Glass Company, Limited, Tokyo 100-8405 (JP)
(72) Inventor: BEPPU, Yoshihisa, Tokyo 100-8405 (JP)
(74) Representative: Müller-Boré & Partner Patentanwälte
(86) International application number: PCT/JP2010/070836
(87) International publication number: WO 2011/065337

(57) **Abstract**

It is to provide a process for producing a phosphate compound capable of producing olivine-type crystalline particles of a phosphate compound excellent in the properties and the reliability, easily at a low cost. Particularly, it is to provide a process for producing a phosphate compound useful as a cathode material for a secondary battery.

Solid particles of a compound (Y) having a composition represented by AₓM_{y}P₃O_{z} (wherein the element A is at least one member selected from the group consisting of Li and Na, the element M is at least one member selected from the group consisting of Fe, Mn, Co and Ni, the valency N of the element M satisfies +2<N≦+4, 0<x<4, and 0<y<3) and a compound (Z) containing the element M are blended to achieve a composition of AₐM_{b}PO_{w} (wherein 0<a<2 and 0.8<b<1.2), the blended product is mixed while it is pulverized, and heated in an inert gas or in a reducing gas to obtain particles of a phosphate compound (X) having a composition represented by AₐM_{b}PO_{w} (wherein A derives from the compound (Y), and M derives from the compounds (Y) and (Z)), by a solid phase reaction.

## Description

### TECHNICAL FIELD

The present invention relates to a process for producing a phosphate compound and a method for producing a secondary battery.

### BACKGROUND ART

In recent years, lithium-ion secondary batteries are broadly used as power supply for portable electronic devices such as mobile phones and notebook computers, electric power tools, etc. As a cathode material for lithium-ion secondary batteries, layered rock-salt type LiCoO₂ is commonly used. However, there have been problems such that layered rock-salt type LiCoO₂ is insufficient in safety, and Co is a limited resource and thus is expensive and variation of the price is large. Further, toward the development and promotion of e.g. electric vehicles and hybrid cars, lithium-ion secondary batteries have been required to have higher capacity and to be larger in size to a large extent while maintaining the safety.

On the other hand, from the viewpoint of resource amount, safety, cost, stability, and so on, an olivine-type phosphate compound (LiMPO₄ (wherein M is a transition metal element)) as represented by olivine-type lithium iron phosphate (LiFePO₄) has been spotlighted as a cathode material for a next-generation lithium-ion secondary battery (Patent Documents 1 and 2). As a method for preparing an olivine-type phosphate compound (LiMPO₄), a solid phase reaction method, a hydrothermal synthesis method, a coprecipitation method and the like have been known.

Patent Document 2 discloses a process for producing LiMPO₄ (wherein M is a transition metal element) in accordance with the solid phase reaction represented by the following formula (1):

Li₂ CO₃ +2[M(COO)₂ ·2H₂ O]+2(NH₄)₂ HPO₄ → 2LiMPO₄ +3CO₂ +2CO+4NH₃ +7H₂ O (1)

This process has such a disadvantage that an oxalate which is an organic acid salt is used as a compound containing the element M, and the oxalate itself is expensive. Further, to mix and pulverize the materials, an organic solvent such as ethanol or acetone must be used, thus increasing the production cost.

Further, the amount of gases generated along with decomposition of the materials is large, and in the formula (1), 8 mols of gases are generated to obtain 1 mol of LiMPO₄. Generation of gases not only involves a gas species which should be treated but also inhibits formation and grain growth of LiMPO₄. A two-stage heating is required, that is, it is necessary to heat a material mixture at from 300 to 400°C to generate gases, then to conduct crushing, pulverization, forming or the like and then to heat the mixture again at from 600 to 800°C to produce LiMPO₄ particles. A case of using an organic acid salt such as an acetate or a citrate as the compound containing the element M also has the same disadvantage since production is conducted similarly.

There is a problem such that since LiMPO₄ has a high electric resistance as compared with conventional cathode materials, when it is used as a cathode material for a lithium-ion secondary battery, an insertion or deinsertion reaction of lithium is likely to be slow at the time of charge or discharge, and as a result, the capacity of the secondary battery is likely to decrease as compared with the theoretical value. Patent Document 3 discloses improvement of the conductivity of the LiMPO₄ particles by incorporating a conductive path comprising carbon in the interior of the particles. However, by the solid phase reaction method using an organic acid salt as the compound containing the element M, the conductive path may not sufficiently be formed due to the reaction at the time of firing or the volume change.

Patent Document 4 discloses a process for producing LiMPO₄ (wherein M is a transition metal element) in accordance with the solid phase reaction represented by the following formula (2):

3Li₂ CO₃+2[M₃ (PO₄)₂ ·8H₂ O]+2(NH₄)₂ HPO₄ → 6LiMPO₄+3CO₂+4NH₃+19H₂O (2)

Although the production cost is low, and the amount of gases generated is small, as compared with the production process of the formula (1), the production cost of the LiMPO₄ cannot sufficiently be reduced, since the phosphate (M₃ (PO₄)₂ ·8H₂ O) used as the compound containing the element M is expensive.

Patent Documents 5 and 6 disclose a process for producing LiMPO₄ in accordance with the solid phase reaction represented by the following formula (3):

Li₃ PO₄ +M₃ (PO₄)₂ ·nH₂ O → 3LiMPO₄ +nH₂ O (3)

Although the reaction is simple and no harmful gas will be formed, the production cost of LiMPO₄ cannot sufficiently be reduced, since the phosphate (M₃ (PO₄)₂ ·nH₂ O) used as the compound containing the element M is expensive. Further, it is difficult to control the composition of the phosphate compound such as lithium iron phosphate.

Patent Document 7 discloses a process for producing crystal particles comprising a compound represented by LiMPO₄ (wherein M is a transition metal element) by melting a mixture comprising Li₂O, an oxide of M such as Fe₂O₃, P₂O₅ and the like, quenching the melt to form precursor glass, and subjecting the precursor glass to heat treatment. This process has such advantages that no gases are generated at the time of production of the particles, and a mass production of the particles is possible. However, the vitrification range in the composition of the precursor glass is narrow, and it is difficult to control the composition of the LiMPO₄ particles.

### PRIOR ART DOCUMENTS

### PATENT DOCUMENTS

| | |
|---|---|
| Patent Document 1: | JP-A-09-134724 |
| Patent Document 2: | JP-A-09-134725 |
| Patent Document 3: | JP-A-2003-203628 |
| Patent Document 4: | JP-A-09-171827 |
| Patent Document 5: | JP-A-2003-292308 |
| Patent Document 6: | JP-A-2003-292309 |
| Patent Document 7: | JP-A-2009-087933 |

### DISCLOSURE OF INVENTION

### TECHNICAL PROBLEM

It is an object of the present invention to provide a process for producing a phosphate compound, which makes it possible to produce a phosphate compound excellent in the properties and the reliability easily at a low cost, by increasing the composition-controllability, the productivity and the like of an olivine-type phosphate compound.

### SOLUTION TO PROBLEM

The present invention provides the following [1] to [15].
[1] A process for producing a phosphate compound, which comprises reacting solid particles of a compound (Y) having a composition represented by AₓM_{y}P₃O₂ (wherein the element A is at least one member selected from the group consisting of Li and Na, the element M is at least one member selected from the group consisting of Fe, Mn, Co and Ni, the valency N of the element M satisfies +2<N≦+4, x satisfies 0<x<4, y satisfies 0<y<3, and z is a number which depends on the values of x and y, and the valency N of the element M); with
   a compound (Z) containing at least one element M selected from the group consisting of Fe, Mn, Co and Ni, by a solid phase reaction;
   to produce a phosphate compound (X) having a composition represented by AₐM_{b}PO_{w} (wherein A and M are as defined above, A is derived from the compound (Y), M is derived from the compound (Y) and the compound (Z), a satisfies 0<a<2, b satisfies 0.8<b<1.2, and w is a number which depends on the values of a and b, and the valency of the element M), comprising:
   a step of blending the solid particles of the compound (Y) and the compound (Z) in a blend ratio to achieve the phosphate compound (X) to obtain a blended product,
   a step of mixing the blended product while pulverizing it to obtain a mixture, and
   a step of heating the mixture in an inert gas or in a reducing gas to obtain the phosphate compound (X) by a solid phase reaction.
[2] The process for producing a phosphate compound according to [1], wherein the solid particles of the compound (Y) are a crystalline substance.
[3] The process for producing a phosphate compound according to [2], wherein the solid particles of the compound (Y) which are a crystalline substance are solid particles obtainable by subjecting solid particles of a compound having a composition represented by A_{z}M_{y}P₃O₂ to heat treatment in the air or in an oxidizing gas having an oxygen partial pressure of higher than 0.21 and at most 1.0.
[4] The process for producing a phosphate compound according to [1], wherein the solid particles of the compound (Y) are an amorphous substance.
[5] The process for producing a phosphate compound according to [4], wherein the solid particles of the compound (Y) which are an amorphous substance are solid particles obtainable by cooling a melt of a compound having a composition represented by AₓM_{y}P₃O_{z} at a cooling rate of from -100 °C/sec to -1×10¹⁰ °C/sec.
[6] The process for producing a phosphate compound according to any one of [1] to [5], wherein the solid particles of the compound (Y) are solid particles of a compound having a composition represented by A₃M₂P₃O₁₂.
[7] The process for producing a phosphate compound according to any one of [1] to [6], wherein the element A is Li.
[8] The process for producing a phosphate compound according to any one of [1] to [7], wherein the compound (Z) is an oxide of the element M.
[9] The process for producing a phosphate compound according to any one of [1] to [8], wherein the compound (Z) is at least one member selected from the group consisting of Fe₂O₃, Fe₃O₄ and MnO₂.
[10] The process for producing a phosphate compound according to any one of [1] to [9], wherein the blended product contains at least one carbon source selected from the group consisting of an organic compound and a carbon powder.
[11] The process for producing a phosphate compound according to [10], wherein the carbon source amount in the blended product is, as the mass as calculated as the carbon amount, from 0.1 to 20 mass% based on the mass of the blended product including the carbon source (provided that the mass of the carbon source is a mass as calculated as the carbon amount).
[12] The process for producing a phosphate compound according to any one of [1] to [11], wherein the obtainable phosphate compound (X) is olivine-type crystalline particles.
[13] The process for producing a phosphate compound according to any one of [1] to [12], wherein the obtainable phosphate compound (X) is olivine-type crystalline particles having a composition represented by LiFe_{c}Mn_{1-c}PO₄ (wherein 0≦c≦1) or olivine-type crystalline particles having a composition represented by LiFePO₄.
[14] A method for producing a cathode for a secondary battery, which comprises obtaining a phosphate compound (X) by the production process as defined in any one of [1] to [13], and using the phosphate compound (X) as a cathode material for a secondary battery to produce a cathode for a secondary battery.
[15] A method for producing a secondary battery, which comprises obtaining a cathode for a secondary battery by the production method as defined in [14], and using the cathode for a secondary battery to produce a secondary battery.

### ADVANTAGEOUS EFFECTS OF INVENTION

According to the process for producing a phosphate compound of the present invention, a phosphate compound can be produced at a low cost without employing special apparatus or reaction conditions, since it tends to be easy to control the composition of the phosphate compound. Accordingly, a phosphate compound excellent in the properties and the reliability, and a secondary battery, can be produced easily at a low cost.

### BRIEF DESCRIPTION OF DRAWINGS

Fig. 1 is a diagram illustrating the X-ray diffraction patterns of the compound (Y) used in Example 6 and the olivine-type phosphate compound particles produced by using the compound (Y). (a) is an X-ray diffraction pattern of amorphous particles of the compound (Y), (b) is an X-ray diffraction pattern of crystalline particles obtained by heating the amorphous particles of (a), and (c) is an X-ray diffraction pattern of olivine-type phosphate compound particles (crystalline particles) produced by the process of the present invention using the amorphous particles of (a).
Fig. 2 is a diagram illustrating an X-ray diffraction pattern of the olivine-type phosphate compound particles (crystalline particles) produced in Example 9.
Fig. 3 is a diagram illustrating an X-ray diffraction pattern of the olivine-type phosphate compound particles (crystalline particles) produced in Example 10.

### DESCRIPTION OF EMBODIMENTS

### <Process for producing phosphate compound (X)>

The process for producing a phosphate compound (X) of the present invention is a process for producing solid particles of the phosphate compound (X) by reacting solid particles of a compound (Y) with a compound (Z) by a solid phase reaction. This production process of the present invention comprises the following steps (1), (2) and (3) in this order.
(1) A step of blending the solid particles of the compound (Y) and the compound (Z) in a blend ratio to achieve the phosphate compound (X) to obtain a blended product (hereinafter sometimes referred to as a blending step).
(2) A step of mixing the blended product while pulverizing it to obtain a mixture (hereinafter sometimes referred to as a mixing step).
(3) A step of heating the mixture in an inert gas or in a reducing gas to obtain the above phosphate compound (X) by a solid phase reaction (hereinafter sometimes referred to as a heating step).

Further, before each step, between steps or after each step, another step may be conducted within a range not to impart the respective steps.

The respective compounds and the respective steps will be described in detail below. Hereinafter, the phosphate compound (X) will sometimes be referred to simply as a compound (X).

### (Phosphate compound (X))

The aimed product in the present invention is a phosphate compound (X) having a composition represented by the following formula (5):

AₐM_{b}PO_{w} (5)

wherein the element A is at least one member selected from the group consisting of Li and Na, the element M is at least one member selected from Fe, Mn, Co and Ni, and the valency N' of the element M satisfies +2≦N'≦+4, a satisfies 0<a<2, b satisfies 0.8<b<1.2, w is a number which depends on the values of a and b and the valency N' of the element M, and the value of w is determined from (a+bN'+5)/2.

The compound (X) obtained by the solid phase reaction of the solid particles of the compound (Y) with the compound (Z) is a solid, and is usually obtained as particles of the compound (X). In the solid phase reaction in the present invention, the product is likely to be formed as primary particles, and fine particles are obtained. In a case where the obtained particles contain secondary particles or are secondary particles, such particles may be pulverized to obtain fine particles.

The particles of the compound (X) obtained by the production process of the present invention are usually crystalline particles. However, they may be crystalline particles containing an amorphous portion. Preferably, in the production process of the present invention, crystalline particles with a small amorphous portion (or containing substantially no amorphous portion) are produced. Further, the crystalline particles are preferably olivine-type crystalline particles.

Further, the particles of the compound (X) obtained by the production process of the present invention may be particles of a solid solution in some cases. That is, such particles are a mixture (mixed crystal) of at least two types of crystals within the composition represented by the above formula (5).

The element A is particularly preferably Li. A powder comprising the olivine-type crystalline particles of a compound (X) wherein the element A is Li (i.e. a phosphate compound having a composition represented by Liₐ M_{b} PO_{w}) is suitable as a cathode material. By using the powder of the olivine-type crystalline particles of the phosphate compound containing Li as a cathode material, the capacity per unit volume (mass) of a secondary battery can be increased.

Further, when the powder of the compound (X) is used as a cathode material, the element M is preferably at least one member selected from the group consisting of Fe and Mn in view of the electrode properties and the material cost. Fe is particularly preferred with a view to obtaining a theoretical capacity of the cathode material.

### (Compound (Y))

One of the materials in the present invention is solid particles of the compound (Y) having a composition represented by the following formula (4):

AₓM_{y}P₃O_{z} (4)

wherein the element A is at least one member selected from the group consisting of Li and Na, the element M is at least one member selected from Fe, Mn, Co and Ni, and the valency N of the element M satisfies +2<N≦+4, x satisfies 0<x<4, y satisfies 0<y<3 and z is a number which depends on the values of x and y, and the valency N of the element M.

When N is within the above range, it is not necessary to carry out preparation of the compound (Y) in an inert gas or in a reducing gas. When the element M is Fe, N may be +3, when the element M is Mn, N may be +4, and when the element M is Co, N may be 8/3.

By adjusting the values of x and y in the formula (4) within the above ranges, a compound (X) having a composition represented by the above formula (5) can be obtained. The value of z depends on the values of x and y, and the valency N of the element M, and varies depending on these values. For example, if the element A is Li, the element M is Fe and the valency N of Fe (element M) is +3, the value of x is 2, and the value of y is 2, then the value of z becomes 12. The value of z is determined from the formula (x+yN+15)/2.

Further, x more preferably satisfies 2.7≦x≦3.3, and y more preferably satisfies 1.8≦y≦2.2. When a compound (Y) having a composition represented by the formula (4) which satisfies these values x and y is used, olivine-type crystalline particles of the compound (X) represented by AMPO₄ are likely to be obtained. Further, when the particles are mixed with the compound (Z) containing the element M, the molar ratio of the compound (Y) to the compound (Z) can be adjusted to a level of from 2/3:3/1 to 1/3:2/3, whereby the pulverization efficiency can be improved.

The compound (hereinafter referred to simply as AₓM_{y}P₃O_{z}, the same applies to other compounds) having a composition represented by AₓM_{y}P₃O_{z} used as the compound (Y) is particularly preferably a compound having a composition represented by A₃M₂P₃O₁₂ (Li₃M₂P₃O₁₂ when the element A is Li). When such A₃M₂P₃ O₁₂ (the valency of M is +3) is mixed with an oxide of the element M (for example, M₂O₃, the valency of M is +3) as the compound (Z) and heated, the solid phase reaction proceeds stoichiometrically in accordance with the following formula (6), whereby AMPO₄ (LiMPO₄ when the element A is Li, the valency of M is +2) is likely to be obtained:

A₃M₂P₃O₁₂+1/2M₂O₃→3AMPO₄+3/4O₂ (6)

The compound (Y) is not limited to a compound consisting solely of the element A, the element M, phosphorus (P) and oxygen (O), but may contain at least one element R selected from the group consisting of V, Si, B, Al, Mg and Zn. By the compound (Y) containing the element R, the reactivity of AₓM_{y}P₃O_{z} or AₐM_{b}PO_{w} can be improved. Further, when amorphous particles are used as the solid particles of the compound (Y), when amorphous particles of the compound (Y) are produced, conversion of the compound (Y) to the amorphous state may be promoted. The content (the total content in the case of a plurality of elements) of the element R is preferably such that the ratio (atomic ratio) of the element R to the total amount of the element M and the element R (R/(M+R)) is from 0.01 to 0.2.

The purity of the compound (Y) is not particularly limited, and is preferably at least 99 mass% considering the reactivity, properties of the phosphate compound, etc. The amount of impurities (for example, non-metal elements derived from the material compounds) comprising elements other than the element R intentionally added is preferably less than 1 mass%. When the type and the content of the impurities are known (for example, when the element M is Fe, and the impurity is Mn), a high purity is not necessarily achieved, and such an impurity is reflected in the composition at the time of preparation.

The solid particles of the compound (Y) may be crystalline particles or amorphous particles. Particularly preferred are solid particles containing an amorphous portion, particularly solid particles containing from 80 to 100 mass% of an amorphous portion (i.e. amorphous particles). When the solid particles of the compound (Y) contain an amorphous portion, AₓM_{y}P₃O_{z} is likely to be obtained in the heating step. Further, as the amorphous portion is soft as compared with the crystalline portion, solid particles containing an amorphous portion are likely to be pulverized, whereby the reactivity with the compound (Z) containing the element M can be increased. The amorphous particles may contain a crystalline portion in a part thereof. When the crystalline portion is contained, its amount is preferably small. Specifically, the amount of the crystalline portion is preferably less than 10 mass%. A small amount of crystals become crystal nuclei in the heating step and have an effect to accelerate the reaction.

### (Preparation of solid particles of compound (Y))

The solid particles of the compound (Y) are obtained by blending a compound containing the element A, a compound containing the element M and a compound containing P so as to achieve a compound having a composition represented by the above formula (4) to obtain a material mixture, and heating the material mixture to react the above material compounds. The crystalline particles are preferably produced by mixing the compound containing the element A, the compound containing the element M and the compound containing P while pulverizing them, and reacting them by the solid phase reaction. Further, the crystalline particles are obtained also by a method of melting the material mixture and gradually cooling the melt for crystallization, or a method of heating an amorphous substance of the compound (Y) for crystallization. The amorphous particles are preferably produced by mixing the compound containing the element A, the compound containing the element M and the compound containing P, heating the mixture to melt it while the compounds are reacted, and quenching the melt. In any of these methods, the obtained solid of the compound (Y) is pulverized as the case requires to obtain solid particles having particle sizes suitable for the purpose.

The average particles of the solid particles of the compound (Y) when used for the blending step (i.e. a step of blending the solid particles of the compound (Y) and the compound (Z)), is preferably from 1 nm to 100 µm as the median diameter as calculated as volume. The average particle size is obtained, for example, by observation by an electronic microscope or measurement by a laser diffraction type particle size analyzer. When the average particle size of the compound (Y) obtained by production of the solid particles of the compound (Y) is out of the above range, the solid particles are preferably preliminarily pulverized and adjusted to be within the above range before blending. Fine particles and the like having sizes out of the above range formed by the pulverization are not necessarily removed. The average particle size of the solid particles of the compound (Y) when used for the blending step is more preferably from 10 nm to 10 µm, particularly preferably from 10 nm to 1 µm, as the median diameter as calculated as volume. Further, when the crystalline particles of the compound (Y) are produced by a solid phase reaction, the crystal particles are preferably produced so that the average particle size is within the above range, whereby the production steps can be shortened.

The above material mixture contains the compound containing the element A, the compound containing the element M and the compound containing P. Preferably, these compounds are mixed while pulverizing them to obtain the material mixture.

The compound containing the element A is preferably at least one member selected from the group consisting of a carbonate of A, a hydrogen carbonate of A, a hydroxide of A, a silicate of A, a phosphate of A, a hydrogen phosphate of A, a nitrate of A, a chloride of A, a sulfate of A, an acetate of A and an oxalate of A (part or all of the at least one member may respectively form a hydrated salt) and is preferably a carbonate or a hydrogen carbonate of A, in view of a low cost and easy handling.

The compound containing the element M may, for example, be an oxide of M (FeO, Fe₃O₄, Fe₂O₃, MnO, Mn₂O₃, MnO₂, CoO, Co₃O₄, Co₂O₃ or NiO), an oxyhydroxide of M (MO(OH)), a metal of M, or a phosphate of M (such as M₃(PO₄)₂ or MPO₄). Preferred is Fe₃O₄, Fe₂O₃, MnO, Mn₂O₃, MnO₂, Co₃O₄ or NiO, in view of the availability and the cost.

The compound containing P may, for example, be phosphorus oxide (P₂O₅), ammonium phosphate ((NH₄)₃PO₄), ammonium monohydrogen phosphate ((NH₄)₂HPO₄), ammonium dihydrogen phosphate (NH₄H₂PO₄), phosphoric acid (H₃PO₄), polyphosphoric acid (H₍ₙ₊₂₎PₙO₍₃ₙ₊₁₎), phosphorous acid (H₃PO₃), hypophosphorous acid (H₃PO₂), a phosphate of A or a phosphate of M, and preferred is (NH₄)₂ HPO₄, NH₄H₂PO₄ or P₂O₅ in view of the availability and the handling efficiency.

A preferred combination of the materials is a carbonate or a hydrogen carbonate of A, an oxide of M or an oxyhydroxide of M, ammonium monohydrogen phosphate and ammonium monohydrogen phosphate, particularly preferably Li₂ CO₃ or LiHCO₃; Fe₃O₄, Fe₂O₃ or MnO₂; ammonium monohydrogen phosphate and ammonium monohydrogen phosphate.

Pulverization and mixing of the above material compounds are carried out preferably by using a ball mill, a jet mill or a planetary mill. The pulverization and mixing may be either dry or wet pulverization and mixing. They are preferably dry pulverization and mixing, whereby removal of the dispersion medium is unnecessary.

### (Production of crystalline particles of compound (Y))

The crystalline particles of the compound (Y) are obtained by heating the material mixture to a temperature at which the mixture is not melted, to react the materials. Further, they may be obtained also by heating the material mixture to obtain a melt, and gradually cooling the melt for crystallization. The former is a solid phase reaction, which is a method of reacting the material compounds while at least part of the material compounds are maintained in a solid state. In the solid phase reaction, part of the material compounds may be melted. Further, the compound may be thermally decomposed at the initial stage of heating, and the thermally decomposed product undergoes the solid phase reaction in some cases. For example, a metal carbonate is thermally decomposed at a temperature lower than the temperature at which the solid phase reaction takes place and converted to a metal oxide, and the formed metal oxide undergoes the solid phase reaction in many cases.

The reaction temperature when the material mixture is reacted by the solid phase reaction varies depending on the type of the material compounds, and is appropriately less than 900°C. The lower limit of the reaction temperature is a temperature at which the solid phase reaction takes place. The reaction temperature of the solid phase reaction is preferably from 350 to 800°C, particularly preferably from 400 to 750°C.

The reaction atmosphere may be any of in the air, in an oxygen-containing inert gas other than the air, and an inert gas containing no oxygen. The reaction is carried out preferably in the air or in an oxidizing gas having an oxygen partial pressure of higher than 0.21 and at most 1.0, particularly preferably in the air the oxygen partial pressure of which is not controlled.

In the case of a method of heating the material mixture to obtain a melt, and gradually cooling the melt for crystallization, it is preferred that the melt is produced by the same method as the after-mentioned method of producing amorphous particles, and the melt is cooled at a low cooling rate as compared with quenching at the production of the amorphous particles to form crystals.

### (Production of amorphous particles of compound (Y))

The amorphous particles of the compound (Y) may be obtained by a method of heating and melting the material mixture and cooling the melt to produce the vitreous amorphous substance, a hydrothermal method or a sol-gel method. With a view to producing amorphous particles in a large amount at a low cost, preferred is a method of heating and melting the material mixture to form a melt of the compound (Y), quenching the melt to produce a vitreous amorphous substance, and pulverizing the substance to form amorphous particles.

The temperature when the material mixture is heated and melted is preferably from 900 to 1,400°C, particularly preferably from 1,000 to 1,300°C. When the temperature is at least the lower limit of the above range, the mixture will easily be melted, and when the temperature is at most the upper limit, the materials hardly volatilize. At such a temperature, the material mixture undergoes reaction to form a compound (Y), whereby a melt of the compound (Y) is formed. The heating and melting time is preferably from 0.2 to 2 hours, particularly preferably from 0.5 to 2 hours. By employing such a time, the uniformity of the melt will be sufficient, and the materials hardly volatilize.

The atmosphere in which the material mixture is heated and melted may be any of in the air, in an oxygen-containing inert gas other than the air, and an inert gas containing no oxygen. It is preferred to heat and melt the material mixture in the air or in an oxidizing gas having an oxygen partial pressure of higher than 0.21 an at most 1.0, particularly preferably in the air having the oxygen partial pressure not controlled.

The method of quenching the melt of the compound (Y) obtained as described above is not particularly limited. However, preferred is a method of dropping the melt into the site between rotating rollers of a twin roller and quenching it, or a method of pressing the melt on a cooled carbon plate or metal plate to quench the melt. The former is particularly preferred, since the cooling rate is high and treatment of a large amount is possible. The twin roller is preferably one made of a metal, a carbon or a ceramic.

In the method of dropping the melt into the site between rotating rollers of a twin roller and quenching it, the cooling rate is preferably at least -100 °C/sec so that the amorphous portion is likely to be obtained, particularly preferably at least -1×10⁴ °C/sec. The upper limit is preferably at a level of -1×10¹⁰ °C/sec considering the production equipment and the mass productivity, and is preferably at most -1×10⁸ °C/sec in view of practicability. By such a quenching method, the amorphous substance can be obtained more easily.

It is also possible to employ a method of directly pouring the melt in water or liquid nitrogen for quenching, as a method of quenching the melt. However, by the method of directly pouring it to water for quenching, it is difficult to control the conditions, and the cooling rate is at a level of from -1×10 to -1×10² °C/sec at best. Further, the method of directly pouring the melt in liquid nitrogen for quenching has the same problems as the method of using water and leads to a high cost, although the cooling rate can be made high as compared with the method of using water.

### (Compound (Z))

The compound (Z) is a compound containing the element M (M has the same meaning as M in the compound (Y), and M in the compound (Y) and M in the compound (Z) may be the same or different).

As the compound (Z), it is preferred to use an oxide, a hydroxide, a phosphate, a nitrate, a sulfate, a chloride or the like of M. It is particularly preferred to use an oxide of M, with which no harmful gas will be generated at the time of reaction with the compound (Y) with heating, and which is easily available at a low cost. As the oxide of M generally has a high bulk density and a small difference of the bulk density with that of the compound (Y) (Aₓ M_{y} P₃ O_{z}), the mixing step and the heating step can efficiently be carried out. The compound (Z) is preferably at least one member selected from the group consisting of Fe₂O₃, Fe₃O₄ and MnO₂, in view of availability at a low cost.

The element M in the compound (Z) may be the same as or different from the element M in the compound (Y). For example, in a case where Aₐ Fe_{b} PO_{w} is to be formed as the phosphate compound (X), AₓFe_{y}P₃O_{z} as the compound (Y) and a Fe oxide such as Fe₂O₃ or Fe₃O₄ as the compound (Z) may be used. Further, when Aₐ(Fe_{c}Mn_{1-c})_{b} PO_{w} (0≦c≦1) is to be formed as the compound (X), Aₓ Fe_{y} P₃ O_{z}, AₓMn_{y}P₃O_{z}, Aₓ(Fe_{c}Mn_{1-c})_{y}P₃O_{z} or the like is used as the compound (Y), and a Fe oxide such as Fe₂O₃ or Fe₃O₄, a Mn oxide such as MnO₂, a composite oxide of Fe and Mn, or the like may be used as the compound (Z). Similarly, when M in Aₐ M_{b} PO_{w} consists of two or more elements, M in the compound (Y) and M in the compound (Z) may be the same or different from each other.

The purity of the compound (Z) is not particularly limited, and is preferably at least 99 mass% considering the reactivity, properties of the phosphate compound, etc. When the type and the content of the impurity are known (for example, when the element M is Fe, and the impurity is Mn), a high purity is not necessarily achieved, and such an impurity is reflected in the composition at the time of blending.

The compound (Z) is preferably used for the blending step in a state of solid particles. The average particle size of the solid particles of the compound (Z) when used for the blending step is preferably at the same level as the average particle size of the solid particles of the compound (Y). That is, it is preferably from 1 nm to 100 µm as the median diameter as calculated as volume. The average particle size is obtained, for example, by observation by an electronic microscope or measurement by a laser diffraction type particle size analyzer. When the average particle size of the solid particles of the compound (Z) before used for the blending step is out of the above range, the solid particles are preferably preliminarily pulverized and adjusted to be within the above range before blending. Fine particles and the like having sizes out of the above range formed by the pulverization are not necessarily removed. The average particle size of the solid particles of the compound (Z) when used for the blending step is more preferably from 10 nm to 10 µm, particularly preferably from 10 nm to 1 µm, as the median diameter as calculated as volume. By using the compound (Z) in the form of such particles, pulverization and mixing in the mixing step can efficiently be conducted.

### [Blending step]

The material blending step is a step of blending the solid particles of the compound (Y) and the compound (Z) to achieve the phosphate compound (X) to obtain a blended product.

The solid particles of the compound (Y) and the compound (Z) are blended to achieve a composition represented by the above formula (5), that is, so that a satisfies 0<a<2 and b satisfies 0.8<b<1.2, whereby particles of a compound (X) having a composition represented by Aₐ M_{b} PO_{w} (wherein A and M are as defined above, A is derived from the compound (Y), and M is derived from the compounds (Y) and (Z)), preferably olivine-type crystalline particles of the compound (X), can be obtained. The particles are particularly preferably olivine-type crystalline particles of a compound (X) having a composition represented by AMPO₄.

In the present invention, the solid particles of the compound (Y) and the compound (Z) are blended to obtain a blended product. A blending means is selected from means of blending specific amounts of two or more compounds, and in the present invention, it is preferred to blend the solid particles of the compound (Y) and the solid particles of the compound (Z) by mixing. To the blended product, at least one carbon source selected from the group consisting of an organic compound and a carbon powder may further be added. Such a carbon source functions as a reducing agent in the heating step, and functions as a conductive material of the powder (hereinafter sometimes referred to as a powder of the compound (X)) comprising particles of the compound (X) obtained. When the powder of the compound (X) is used as a cathode material, by the powder of the compound (X) containing the conductive material, the conductivity of the cathode material can be increased.

The carbon powder added to the blended product adheres to the particle surface of the particles (preferably olivine-type crystalline particles) of the compound (X) formed in the after-mentioned heating step to improve the conductivity among particles. The organic compound functions as a binder of particles of the compound (X) and in addition, it itself is thermally decomposed by the heating step and carbonized to improve the conductivity among particles. Both the organic compound and the carbon powder function as a conductive material, and accordingly at least one of them may be added.

Further, in a case where a carbon powder is used as the conductive material, it is preferably used in combination with an organic compound for the purpose of improving the binding force to the particle surface. That is, it is preferred that an organic compound is singly added, a carbon powder is singly added, or an organic compound and a carbon powder are added, to the blended product. The carbonized material, which is the thermally decomposed product of the organic compound in the heating step, itself functions as a conductive material as well as functions as a binder of the carbon powder. Accordingly, the organic compound is preferably one which is thermally decomposed in the heating step and has a property to be carbonized by detachment of hydrogen atoms and oxygen atoms, whereby it is possible to let the reaction product of the organic compound in the heating step function as a conductive material.

The organic compound and the carbon powder have a function to accelerate the reduction reaction of the blended product of the solid particles of the compound (Y) and the compound (Z) in the heating step. For example, when A₃M₂P₃O₁₂ (the valency of M is +3) and M₂O₃ (the valency of M is +3) are heated, when an organic compound (CₘHₙ) is added, the reduction reaction is accelerated in accordance with the following formula (7), whereby AMPO₄ (the valency of M is +2) is likely to be obtained. In the following formula (7), m satisfies 0≦m≦3/4, n satisfies 0<n<3/2, and the other symbols are as defied above:

A₃M₂P₃O₁₂+1/2M₂O₃+CₘHₙ → 3AMPO₄+mCO₂+n/2H₂O (7)

The organic compound is preferably one which is decomposed and carbonized at a temperature higher than the reaction temperature (in a case where the solid particles of the compound (Y) are amorphous particles, including the crystal nucleus formation and grain growth temperature) of the solid particles of the compound (Y) and the compound (Z). However, since the volume change due to the reaction of the solid particles of the compound (Y) and the compound (Z) is small, the organic compound is not limited by its thermal decomposition temperature. Further, since the organic compound itself functions as a binder of the carbon powder to the particles of the compound (X), the organic compound may be one which is not thermally decomposed or carbonized in the heating step, depending on circumstances. In such a case, the organic compound is used in combination with the carbon powder. The organic compound is used preferably in combination with a solvent. As the solvent, water is preferably used, and the organic compound is preferably water-soluble so as to be uniformly dispersed on the particle surface of the blended product. Further, the organic compound preferably has a reducing property in order to prevent oxidation of the blended product in the mixing step and to accelerate reduction.

The organic compound is preferably a water-soluble organic compound, preferably at least one member selected from the group consisting of saccharides, amino acids, peptides, aldehydes and ketones, and particularly preferably saccharides, amino acids or peptides. The saccharides may by monosaccharides such as glucose, fructose and galactose, oligosaccharides such as sucrose, maltose, cellobiose and trehalose, inverted sugar, polysaccharides such as dextrin, amylose, amylopectin and cellulose, and a related substance thereof, such as ascorbic acid. In a case where a saccharide is used as the organic compound, the organic compound is likely to have a high solubility in water as the molecular weight is low. Particularly, monosaccharides and some of oligosaccharides have a strong reducing property and preferred.

The amino acids may be amino acids such as alanine and glycin. The peptides are preferably low-molecular-weight peptides having a molecular weight of at most 1,000. Further, an organic compound having a reducing functional group such as an aldehyde group or a ketone group may also be used. The organic compound is particularly suitably glucose, sucrose, glucose-fructose inverted sugar, caramel, a water-soluble starch, an α-starch, carboxymethyl cellulose, or the like.

As the carbon powder, carbon black (such as acetylene black), graphite, or the like may preferably be used. The carbon powder is added to the blended product, whereby it becomes not necessary to separately provide, after the particles of the compound (X) are obtained in the heating step, a step of mixing the carbon powder with the powder comprising the particles. Further, by adding the carbon powder to the blended product together with the organic compound, the distribution of the carbon powder in the cathode material comprising the powder of the compound (X) becomes uniform, and contact area with the organic compound or its thermally decomposed material (carbonized material) becomes large. It thereby becomes possible to increase the binding force of the carbon powder to the particles of the compound (X).

In a case where the carbon source is contained in the blended product, the carbon source amount in the blended product is preferably from 0.1 to 20 mass%, particularly preferably from 2 to 10 mass% based on the mass of the blended product including the carbon source (the mass of the carbon source is a mass as calculated as the carbon amount), as the mass as calculated as the carbon amount. The mass as calculated as the carbon amount of the carbon source means, in the case of the organic compound, the amount of carbon atoms contained therein. This is because the organic compound is usually contained as carbon in the powder of the compound (X) obtained in the heating step. In a case where the carbon source is a carbon powder such as carbon black, the mass as calculated as the carbon amount is the amount of the carbon powder.

The amount (mass) as calculated as carbon being at least the lower limit of the above range has such advantages that the conductivity of a cathode material comprising the powder of the compound (X) can sufficiently be increased. The amount (mass) as calculated as carbon being at most the upper limit of the above range has such advantages that when the powder of the compound (X) is used as a cathode material, properties as the cathode material can be maintained high.

### [Mixing step]

The mixing step is a step of mixing the blended product obtained in the blending step while pulverizing it. To the blended product, the above carbon source may be added. Further, the carbon source may be added during the mixing step, or the carbon source may be added and mixed after the mixing step. The carbon source is preferably contained in the blended product before the mixing step.

The mixing step is carried out preferably by a ball mill, a jet mill, a planetary mill or the like. The mixing step may be dry-mixing, but is preferably wet-mixing. Particularly when the blended product contains a carbon source, the blended product is preferably wet mixed while pulverizing it, so as to uniformly disperse the carbon source on the surface of the pulverized particles.

In the case of wet mixing the blended product while pulverizing it, as the dispersion medium, water or an organic solvent such as ethanol, isopropyl alcohol, acetone, hexane or toluene may be used. Water is preferred in view of handling efficiency, the low cost and the safety. Further, as the solid particles of the compound (Y) are water-insoluble, and the compound (Z) is usually water-insoluble, water is effective as a dispersion medium at the time of wet pulverizing and mixing.

The average particle size of the solid particles of the compound (Y) in the mixture when the mixing step is completed is preferably at most 10 µm, particularly preferably at most 1 µm by the median diameter as calculated as volume, so as to accelerate the reaction of the solid particles of the compound (Y) and the compound (Z) in the heating step. When the average particle size is at most the above upper limit, the heating temperature can be reduced and the time can be shortened in the heating step. Also in a case where the compound (Z) is in the form of solid particles, the average particle size of the solid particles of the compound (Z) in the mixture when the mixing step is completed is preferably at most 10 µm, particularly preferably at most 1 µm, by the median diameter as calculated as volume, from the same reason.

In a case where the mixing step is carried out by wet mixing, it is preferred that the dispersion medium is removed by e.g. sedimentation, filtration, reduced-pressure drying or heat drying, followed by the heating step. Removal of the dispersion medium may be incorporated in the initial stage of the heating step.

### [Heating step]

The heating step is a step of heating the mixture containing the solid particles of the compound (Y) and the compound (Z) to carry out a reaction by a solid phase reaction. In this step, it is preferred to obtain crystalline particles of the phosphate compound (X), particularly olivine-type crystalline particles. In a case where the solid particles of the compound (Y) are amorphous particles, it is preferred that they are subjected to a solid phase reaction with the compound (Z) in the heating step to form the compound (X) and in addition, the crystal nucleus formation and the grain growth of the formed compound (X) are let occur to form crystalline particles of the compound (X). Further, in a case where a mixture containing a carbon source is used, carbon will adhere to the particle surface of the compound (X) formed in the heating step, whereby a powder of the compound (X) containing carbon can be obtained.

The heating step is carried out preferably in an inert gas or in a reducing gas at a heating temperature of from 400 to 900°C. In a case where amorphous particles are used as the solid particles of the compound (Y), the heating step may be carried out at a temperature lower than the heating temperature of a conventional solid phase reaction. When the heating temperature is at least 400°C, the reaction is likely to occur. Further, when amorphous particles are used as the solid particles of the compound (Y), crystals of the compound (X) are likely to precipitate. When the heating temperature is at most 900°C, melting will hardly occur. The heating temperature is more preferably from 500 to 800°C. Within the above range, olivine-type crystalline particles of the compound (X) having appropriate crystallinity, particle size, particle size distribution, etc. are likely to be obtained.

The heating step is not limited to such that the temperature is maintained constant, and may be carried out by setting multiple steps of temperature. Since in a temperature range of from 400 to 900°C, the diameter of the crystalline particles to be formed tends to be large as the heating temperature is high, the heating temperature may be set according to the desired particle size. Further, the heating time (retention time at the heating temperature) is preferably from 2 to 72 hours considering the desired particle size. The particle size may be increased even by a longer heating time, however, since the influence of the heating time is not so large as the heating temperature, when the diameter of the olivine-type crystalline particles is desired to be finely adjusted, the heating time is preferably adjusted.

The heating step is carried out in an inert gas or in a reducing gas, whereby crystalline particles of the phosphate compound (X), preferably olivine-type crystalline particles can be obtained. The inert gas means a gas containing at least 99 vol% of at least one inert gas selected from the group consisting of nitrogen gas (N₂) and rare gases such as helium gas (He) and argon gas (Ar). The reducing gas means a gas comprising the above inert gas and containing a gas having a reducing property, and containing substantially no oxygen. The gas having a reducing property may, for example, be hydrogen gas (H₂), carbon monoxide gas (CO) or ammonia gas (NH₃). With respect to the amount of the gas having a reducing property in the inert gas, the amount of the gas having a reducing property is preferably at least 0.1 vol%, particularly preferably from 1 to 10 vol% in the entire gas. The oxygen content is preferably at most 1 vol%, particularly preferably at most 0.1 vol% in the gas.

The heating step may be carried out under reduced pressure (at most 0.9×10⁵ Pa) in the inert gas or in the reducing gas. Further, a container containing a reducing agent may be loaded in a heating furnace. According to such a heating step, it is possible to accelerate reduction of M ions (for example, a change from M³⁺ to M²⁺), whereby olivine-type crystalline particles of the phosphate compound (X) having a composition represented by Aₐ M_{b} PO_{w} (particularly, AMPO₄) can be obtained with good reproducibility.

The carbon source added in the blending step or in the mixing step binds to the crystal surface of the phosphate compound (X) formed in the heating step and functions as a conductive material. The organic compound is thermally decomposed in the heating step, and further at least a part turns to a carbonized material (reaction product) and functions as a conductive material. The thermal decomposition of the organic compound is preferably carried out at a temperature of at most 400°C, and the carbonization is preferably carried out at a temperature of at most 600°C.

By means of the above-described steps, a powder comprising crystalline particles of a phosphate compound (X), preferably a powder comprising olivine-type crystalline particles, particularly a powder comprising olivine-type crystalline particles useful as a cathode material for a secondary battery, is produced. The powder includes both primary particles and secondary particles. Further, when a carbon source is used in the production step, simultaneously with the formation of the crystalline particles of the compound (X), a powder wherein a conductive material based on the carbon source (a carbonized product of the organic compound, the carbon powder, a mixture thereof, etc.) is uniformly and strongly bound to the particle surface, is produced. This powder is suitable as a cathode material for a secondary battery. In a case where secondary particles are present in the obtained powder of the compound (X), they may be crushed or pulverized to such an extent that the primary particles are not broken. The average particle size of the particles of the compound (X) in the present invention is preferably from 10 nm to 10 µm, particularly preferably from 10 nm to 2 µm as the median diameter as calculated as volume. When the average particle size is within the above range, the conductivity will be higher.

According to the production process of the present invention, the composition of the phosphate compound (X) is easily controlled, and a powder of a phosphate compound (X) can be produced easily at a low cost without employing special apparatus or reaction conditions. Particularly, the production efficiency of the olivine-type crystalline particles can be increased. Further, olivine-type crystalline particles excellent in uniformity in the chemical composition and the particle size and having a high crystallinity, can be obtained. By such olivine-type crystalline particles, it is possible to improve the properties and the reliability based on the uniformity of the chemical composition and the particle size. Further, since the obtained olivine-type crystalline particles have a high crystallinity, it is possible to suppress a functional decline during repeated use, when applied to a cathode material for a secondary battery. Accordingly, it is possible to provide a cathode material for a secondary battery excellent in the properties and the reliability at a low cost.

Further, when a carbon source is used, since a conductive material can be bound to the particle surface of the compound (X) uniformly and strongly, it is possible to improve the conductivity and the reliability of a cathode material employing the powder of such olivine-type crystalline particles. That is, a cathode material for a secondary battery excellent in the properties and the reliability containing a conductive material can be obtained with good reproducibility. Thus, it is possible to improve the capacity of lithium-ion secondary batteries as well as to provide a cathode material for a secondary battery capable of maintaining its properties and reliability for a long period of time.

The powder of the phosphate compound (X) obtainable by the production process of the present invention is useful as a cathode material, and is a powder comprising particles of a compound having a composition represented by the above-described formula (5). Particularly preferred is a compound having a composition using Li as the element A and using at least one member selected from the group consisting of Fe and Mn as the element M. The composition of the phosphate compound is preferably LiMPO₄, more preferably LiFe_{c}Mn_{1-c}PO₄ (0≦c≦1), particularly preferably LiFePO₄. A powder comprising a phosphate compound having such a composition is suitable as a cathode material for a secondary battery.

A particularly preferred production process of the present invention is described below, however, the present invention is not limited thereto.

Crystalline particles or amorphous particles are used as the solid particles of the compound (Y), and a compound having a composition represented by Aₓ(Fe_{c}Mn_{1-c})_{y}P₃O_{z} (0≦c≦1) wherein the element M is at least one member selected from the group consisting of Fe and Mn, is used as the compound (Y). As the compound (Z), a compound of M is used. It is particularly preferred to select M the oxide of which is likely to be obtained as fine particles, whereby the reaction of the solid particles of the compound (Z) with the solid particles of the compound (Y) is accelerated. The obtained phosphate compound (X) is preferably in the form of crystalline particles.

A particularly preferred is a process for producing olivine-type crystalline particles having a composition represented by LiFe_{c}Mn_{1-c}PO₄ (0≦c≦1) by a solid phase reaction by using Li₃Fe₂P₃O₁₂ as the compound (Y), and at least one member selected from the group consisting of Fe₃O₄, Fe₂O₃ and MnO₂ as the compound (Z). Further, a process for producing olivine-type crystalline particles having a composition represented by LiFeO₄ by a solid phase reaction by using solid particles of a compound (Y) having a composition represented by Li₃Fe₂P₃O₁₂ and solid particles of at least one member selected from the group consisting of Fe₃O₄ and Fe₂O₃ as the compound (Z), may also be mentioned.

### <Methods for producing cathode for secondary battery and secondary battery>

The powder of the phosphate compound (X) obtained by the production process of the present invention is useful as a cathode material for a secondary battery. Accordingly, by using the powder of the phosphate compound (X), a cathode for a secondary battery and a secondary battery can be produced.

The secondary battery may, for example, be a lithium metal secondary battery, a lithium-ion secondary battery or a lithium polymer secondary battery, and is preferably a lithium-ion secondary battery. The shape of the cell is not limited, and various shapes and sizes may properly be employed, such as a cylindrical form, a square form or a coin-form.

Production of a cathode for a secondary battery is conducted in accordance with a known process for producing an electrode except that the powder of the phosphate compound (X) obtainable by the production process of the present invention is used. For example, the powder of the phosphate compound (X) of the present invention is mixed as the case requires with a known binder (such as polytetrafluoroethylene, polyvinylidene fluoride, polyvinyl chloride, an ethylene propylene diene polymer, a styrene/butadiene rubber, an acrylonitrile/butadiene rubber, a fluororubber, polyvinyl acetate, polymethyl methacrylate, polyethylene or nitrocellulose) and further with a known conductive material (such as acetylene black, carbon, graphite, natural graphite, artificial graphite or needle coke) as the case requires, and the obtained powder mixture is compressed on a support made of stainless steel or the like, or may be put in a metal container. Otherwise, for example, an electrode can be produced also e.g. by a method of applying a slurry obtained by mixing the powder mixture with an organic solvent (such as N-methylpyrrolidone, toluene, cyclohexane, dimethylformamide, dimethylacetamide, methyl ethyl ketone, methyl acetate, methyl acrylate, diethyltriamine, N-N-dimethylaminopropylamine, ethylene oxide or tetrahydrofuran) to a metal substrate of e.g. aluminum, nickel, stainless steel or copper.

For production of a secondary battery, constituents in a known secondary battery can be employed so long as the cathode for a secondary battery obtainable by the production process of the present invention is used as an electrode. The same applies to elements such as a separator and a cell casing. As the anode, it is possible to use a known active material for an anode as an active material, but it is preferred to use at least one member selected from the group consisting of an alkali metal material and an alkaline earth metal material. The electrolyte solution is preferably a non-aqueous electrolyte solution. That is, the secondary battery obtainable by the production process of the present invention is preferably a non-aqueous electrolytic lithium-ion secondary battery.

### EXAMPLES

Now, the present invention will be described in further detail with reference to Examples. However, it should be understood that the present invention is by no means restricted to the specific Examples.

### (Example 1)

Lithium carbonate (Li₂CO₃), iron(II) oxide (Fe₂O₃) and ammonium dihydrogen phosphate (NH₄ H₂ PO₄) were weighed to achieve a composition represented by Li₃Fe₂P₃O₁₂, i.e. so that the molar ratio of the materials became 3:2:6, and wet-pulverized and mixed using ethanol as a medium. The mixture was heated in the air at 350°C for 2 hours, and then cooled to room temperature and dry-crushed. The obtained crushed product was heated in the air at 700°C for 8 hours to obtain a powder of a compound having a composition represented by Li₃Fe₂P₃O₁₂. Mineral phase of the obtained compound was identified by an X-ray diffractometer, whereupon a diffraction pattern similar to an existing diffraction pattern of Li₃Fe₂(PO₄)₃ (PDF number: 01-078-1106) was obtained.

Then, a crystalline compound having a composition represented by Li₃Fe₂P₃O₁₂ and iron(II) oxide (Fe₂O₃) were blended in a molar ratio based on oxides of 2:1, and carbon black was added to the obtained blended product so that the mass ratio of the blended product to carbon black became 9:1. The mixture was wet-pulverized and mixed using water as a medium. The obtained mixture was heated in a 3 vol% H₂-Ar atmosphere at 700°C for 8 hours to obtain particles of a phosphate compound having a composition represented by LiFePO₄ containing carbon.

Mineral phase of the obtained particles was identified by using an X-ray diffractometer. As a result, a diffraction pattern similar to an existing diffraction pattern of LiFePO₄ (PDF number: 01-083-2092) was obtained, and the obtained particles were confirmed to be crystalline particles. Further, the surface of the particles was observed by a scanning electron microscope, whereupon it was confirmed that carbon was uniformly attached to the particle surface. Further, the diameter (major axis) of the particles considered to be primary particles was measured, whereupon the average of 10 particles was 2.8 µm. The carbon content of the particles was quantitatively determined by using a carbon analyzer, and it was 5.6 mass% as the amount of C.

### (Example 2)

The compound having a composition represented by Li₃Fe₂P₃O₁₂ obtained in Example 1 and iron(II) oxide (Fe₂O₃) were blended in a molar ratio based on oxides of 2:1, and carbon black and glucose were added to the obtained blended product so that the mass ratio of the blended product: carbon black: glucose became 90:5:5. The mixture was wet-pulverized and mixed using water as a medium. The obtained mixture was dried at 110°C and then heated under the same conditions as in Example 1 to obtain particles of a phosphate compound having a composition represented by LiFePO₄ containing carbon. The diffraction pattern of the obtained particles was similar to an existing diffraction pattern of LiFePO₄ (PDF number: 01-083-2092), and the obtained particles were confirmed to be crystalline particles.

### (Example 3)

Lithium carbonate (Li₂CO₃), triiron tetraoxide (Fe₃O₄) and ammonium dihydrogen phosphate (NH₄H₂PO₄) were blended to achieve a composition represented by Li₃Fe₂P₃O₁₂, i.e. so that the molar ratio of the materials became 9:4:18, and the blended product was pulverized and mixed, and heated, in the same manner as in Example 1 to obtain a powder of a compound having a composition represented by Li₃Fe₂P₃O₁₂. The diffraction pattern of particles of the obtained compound was similar to an existing diffraction pattern of Li₃Fe₂(PO₄)₃ (PDF number: 01-078-1106), and the particles were confirmed to be crystalline particles.

Then, the compound having a composition represented by Li₃Fe₂P₃O₁₂ and triiron tetraoxide (Fe₃O₄) were blended in a molar ratio based on oxides of 3:1, and the blended product was wet-pulverized and mixed using water as a medium. The obtained mixture was heated in a 3 vol% H₂-Ar atmosphere at 700°C for 8 hours to obtain particles of a phosphate compound having a composition represented by LiFePO₄. Mineral phase of the obtained particles was identified by using an X-ray diffractometer, whereupon a diffraction pattern similar to an existing diffraction pattern of LiFePO₄ (PDF number: 01-083-2092) was obtained, and the obtained particles were found to be crystalline particles. Further, the particle size distribution was measured by using a laser diffraction/scattering particle size distribution measuring device (manufactured by HORIBA, Ltd., device name: LA-920), whereupon the median particle size as calculated as volume was 2.5 µm.

### (Example 4)

The compound having a composition represented by Li₃Fe₂P₃O₁₂ obtained in Example 3 and triiron tetraoxide (Fe₃O₄) were blended in a molar ratio based on oxides of 3:1, and carbon black was added to the blended product so that the mass ratio of the blended product to carbon black became 9:1. The mixture was wet-pulverized and mixed using water as a medium. The obtained mixture was heated in an Ar atmosphere at 700°C for 8 hours to obtain particles of a phosphate compound having a composition represented by LiFePO₄ containing carbon. Mineral phase of the obtained particles was identified by using an X-ray diffractometer, whereupon a diffraction pattern similar to an existing diffraction pattern of LiFePO₄ (PDF number: 01-083-2092) was obtained, and the obtained particles were found to be crystalline particles.

### (Examples 5 to 7)

Lithium carbonate (Li₂CO₃), iron(II) oxide (Fe₂O₃) and ammonium dihydrogen phosphate (NH₄H₂PO₄) were weighed to achieve a composition represented by Li_{3.5}Fe₂P₃O_{12.1} (Example 5), a composition represented by Li₃Fe₂P₃O₁₂ (Example 6) or a composition represented by Li₃Fe_{2.2}P₃O_{12.3} (Example 7), and the blended product was dry-pulverized and mixed. A crucible made of a platinum alloy containing 20 mass% of rhodium provided with a nozzle was charged with the obtained mixture, and by using an electric furnace provided with a heating element made of molybdenum silicide, the mixture was heated in the air at 1,300°C for 0.5 hour and completely melted.

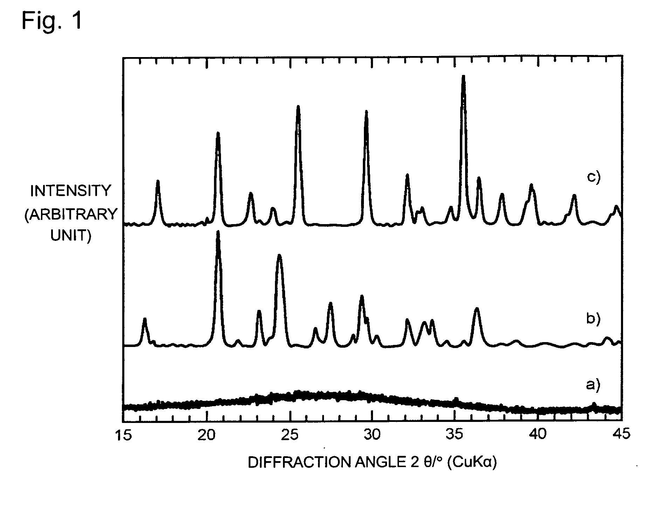

Then, while the lower end part of the nozzle provided to the crucible was heated by the electric furnace, the molten material was dropped, and the dropped molten material was permitted to pass through a twin roller having a diameter of about 15 cm and rotating at 400 rpm to rapidly cool the droplets at a cooling rate of 1×10⁵ °C/sec, thereby to prepare a brownish-red and transparent solid (amorphous substance) in the form of flakes. The X-ray diffraction pattern of the solid (amorphous substance) in the form of flakes obtained in Example 6 is shown in Fig. 1(a). Then, a part of the obtained solid in the form of flakes was dry-pulverized for 8 hours and then heated in the air at 700°C for 8 hours, whereupon it was converted to a crystalline substance. The X-ray diffraction pattern of the crystalline substance produced from the part of the solid in the form of flakes obtained in Example 6 is shown in Fig. 1(b).

The solid (amorphous substance) in each of Examples 5 to 7 and triiron tetraoxide (Fe₃O₄) were blended in a molar ratio based on oxides of 3:1, and the blended product was wet-pulverized and mixed using water as a medium. Each mixture was heated in a 3 vol% H₂-Ar atmosphere at 500°C for 24 hours to obtain particles of a phosphate compound having a composition represented by LiFePO₄. Mineral phase of the obtained particles was identified by an X-ray diffractometer, whereupon a diffraction pattern similar to an existing diffraction pattern of LiFePO₄ (PDF number: 01-083-2092) was obtained, and the particles were confirmed to be crystalline particles, in each Example. The X-ray diffraction pattern of the LiFePO₄ particles obtained in Example 6 is shown in Fig. 1(c).

### (Example 8)

The solid (amorphous substance) (Li₃Fe₂P₃O₁₂) obtained in Example 6 and triiron tetraoxide (Fe₃O₄) were blended in a molar ratio based on oxides of 3:1, and carbon black and glucose were added to the blended product so that the mass ratio of the blended product: carbon black: glucose became 90:5:5. The mixture was wet-pulverized and mixed using water as a medium. The obtained mixture was heated in an Ar atmosphere at 500°C for 16 hours to obtain particles of a phosphate compound having a composition represented by LiFePO₄ containing carbon. The diffraction pattern of the obtained particles was similar to an existing diffraction pattern of LiFePO₄ (PDF number: 01-083-2092), and the obtained particles were confirmed to be crystalline particles.

### (Example 9)

The solid (amorphous substance) (Li₃Fe₂P₃O₁₂) obtained in Example 6 and manganese dioxide (MnO₂) were blended in a molar ratio based on oxides of 1:1, and carbon black and glucose were added to the blended product so that the mass ratio of the blended product: carbon black: glucose became 90:5:5. The mixture was wet-pulverized and mixed using water as a medium. The obtained mixture was heated under the same conditions as in Example 6 to obtain particles of a phosphate compound having a composition represented by LiFe_{2/3}Mn_{1/3}PO₄ containing carbon.

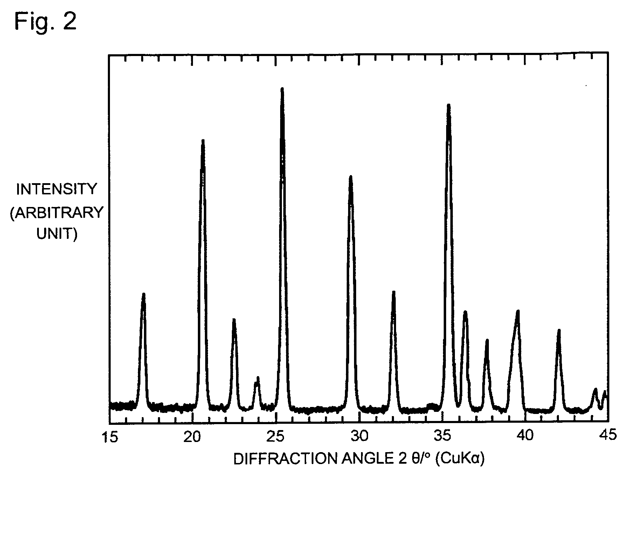

Mineral phase of the obtained particles was identified by an X-ray diffractometer, whereupon a diffraction pattern similar to existing diffraction pattern of LiFePO₄ (PDF number: 01-083-2092) and diffraction pattern of LiMnPO₄ (PDF number: 01-077-0178) was obtained, and the obtained particles were considered to be a solid solution of them. The X-ray diffraction pattern of the particles is shown in Fig. 2.

### (Example 10)

Lithium carbonate (Li₂CO₃), iron(II) oxide (Fe₂O₃), manganese dioxide (MnO₂) and ammonium dihydrogen phosphate (NH₄H₂PO₄) were weighed to achieve a composition represented by Li₃Fe_{1.4}Mn_{0.6}P₃O₁₂, and pulverized and mixed, melted and rapidly cooled in the same manner as in Example 6 to obtain a solid in the form of flakes. The obtained solid (amorphous substance) (Li₃Fe_{1.4}Mn_{0.6}P₃O₁₂ compound) and triiron tetraoxide (Fe₃O₄) were blended in a molar ratio based on oxides of 3:1, and the blended product was heated under the same conditions as in Example 6 to obtain particles of a phosphate compound having a composition represented by LiFe_{0.8} Mn_{0.2} PO₄ containing carbon.

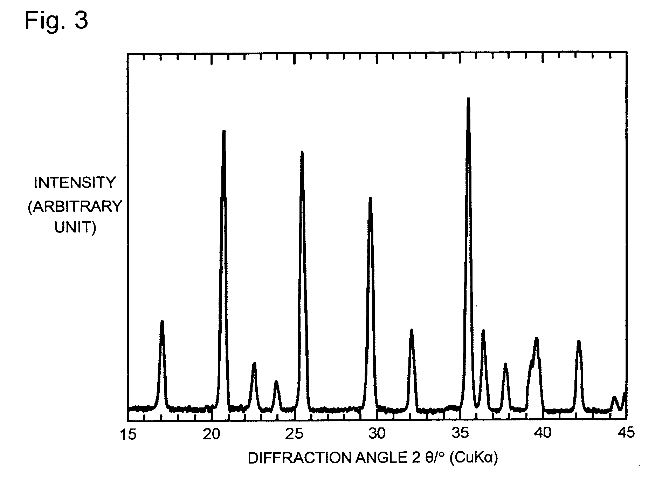

Mineral phase of the obtained particles was identified by an X-ray diffractometer, whereupon a diffraction pattern similar to existing diffraction pattern of LiFePO₄ (PDF number: 01-083-2092) and diffraction pattern of LiMnPO₄ (PDF number: 01-077-0178) was obtained, and the obtained particles were considered to be a solid solution of them. The X-ray diffraction pattern of the particles is shown in Fig. 3.

### (Example 11)

Lithium carbonate (Li₂CO₃), iron(II) oxide (Fe₂O₃), manganese dioxide (MnO₂), tricobalt tetraoxide (Co₃O₄), nickel oxide (NiO) and ammonium dihydrogen phosphate (NH₄H₂PO₄) were weighed to achieve a composition represented by Li₃Fe_{1.7}Mn_{0.1}Co_{0.1}Ni_{0.1}P₃O₁₂, and pulverized and mixed, melted and rapidly cooled in the same manner as in Example 6 to obtain a solid in the form of flakes.

Then, the obtained solid (amorphous substance) (Li₃Fe_{1.7}Mn_{0.1}Co_{0.1}Ni_{0.1}P₃O₁₂) and triiron tetraoxide (Fe₃O₄) were blended in a molar ratio based on oxides of 3:1 and heated in the same manner as in Example 6 to obtain particles of a phosphate compound having a composition represented by LiFe_{0.9}Mn_{0.033}Co_{0.033}Ni_{0.033}PO₄ containing carbon. Mineral phase of the obtained particles was identified by an X-ray diffractometer, whereupon a diffraction pattern similar to an existing diffraction pattern of LiFePO₄ (PDF number: 01-083-2092) was obtained.

### (Example 12)

Lithium carbonate (Li₂CO₃), iron(II) oxide (Fe₂O₃), ammonium dihydrogen phosphate (NH₄H₂PO₄), boron oxide (B₂O₃) and silicon oxide (SiO₂) were weighed to achieve a composition represented by Li₃Fe₂P_{2.7}B_{0.1}Si_{0.2}O_{11.8}, and pulverized and mixed, melted and rapidly cooled in the same manner as in Example 6 to obtain a solid in the form of flakes.

Then, the obtained solid (amorphous substance) (Li₃Fe₂P_{2.7}B_{0.1}Si_{0.2}O_{11.8}) and triiron tetraoxide (Fe₃O₄) were blended in a molar ratio based on oxides of 3:1 and heated under the same conditions as in Example 6 to obtain particles of a phosphate compound having a composition represented by LiFe_{0.9}P_{0.9}B_{0.033}Si_{0.067}O_{3.9} containing carbon. Mineral phase of the obtained particles was identified by an X-ray diffractometer, whereupon a diffraction pattern similar to an existing diffraction pattern of LiFePO₄ (PDF number: 01-083-2092) was obtained.

### (Example 13)

### [Production of cathode for Li-ion secondary battery and cell for evaluation]

A powder (cathode material) comprising particles of the phosphate compound having a composition represented by LiFePO₄ containing carbon obtained in Example 6 as an active material, a polyvinylidene fluoride resin as a binder and acetylene black as a conductive material were weighed so that the ratio would be 85:5:10 by mass, and they were well mixed in N-methylpyrrolidone as a solvent to obtain a slurry. Then, this slurry was applied on an aluminum foil having a thickness of 30 µm with a bar coater, and dried in the air at 120°C to remove the solvent. The coating layer was consolidated by a roll press, and the aluminum foil was cut into stripes having a width of 10 mm and a length of 40 mm.

The coating layer was peeled except for an edge portion of 10×10 mm of the strip-shaped aluminum foil to obtain an electrode. The thickness of the coating layer of the obtained electrode after roll press was 20 µm. The obtained electrode was dried in vacuum at 150°C, and then it was brought into a glove box filled with a purified argon gas and was permitted to face to a counter electrode wherein lithium foil was compressed to a nickel mesh via a separator made of a porous polyethylene film, and the both sides were wedged between polyethylene plates to be fixed.

The facing electrodes were put in a polyethylene beaker, and a non-aqueous electrolyte solution obtained by dissolving lithium hexafluorophosphate in a mixed solvent of ethylene carbonate and ethyl methyl carbonate (in a volume ratio of 1:1) in a concentration of 1 mol/L was poured thereto to let the facing electrodes be efficiently impregnated. The electrodes after impregnation with the electrolyte solution were removed from the beaker and put in a bag made of aluminum laminate film, and the lead portion was taken out from the bag, followed by sealing to obtain a half-cell. Characteristics of this half-cell were measured as follows.

### [Evaluation of charge-discharge characteristics of cathode for Li-ion secondary battery]

The obtained half-cell was put in a constant-temperature oven of 25°C and was connected to a constant current charge-discharge tester (manufactured by Hokuto Denko Corporation, device name: HJ201 B) to carry out a charge-discharge test. As to current density, the current value per mass of the electrode active material (mass except for the conductive material and the binder) was set to be 85 mA/g, and charge-discharge were carried out. The charge cut-off voltage was set to be 4.2 V against the Li counter electrode as a reference, and discharge was started immediately after the voltage reached the cut-off voltage. The discharge cut-off voltage was set to be 2.0 V against the Li counter electrode as a reference. This charge-discharge cycle was repeated for 10 times. The discharged capacity in the 10th cycle was 147 mAh/g.

### INDUSTRIAL APPLICABILITY

The phosphate compound obtainable by the present invention is useful as a cathode material to be used for production of a cathode of a secondary battery such as a lithium-ion secondary battery.

The entire disclosure of Japanese Patent Application No. 2009-266372 filed on November 24, 2009 including specification, claims, drawings and summary is incorporated herein by reference in its entirety.

## Claims

1. A process for producing a phosphate compound, which comprises reacting solid particles of a compound (Y) having a composition represented by AₓM_{y}P₃O_{z} (wherein the element A is at least one member selected from the group consisting of Li and Na, the element M is at least one member selected from the group consisting of Fe, Mn, Co and Ni, the valency N of the element M satisfies +2<N≦+4, x satisfies 0<x<4, y satisfies 0<y<3, and z is a number which depends on the values of x and y, and the valency N of the element M); with
a compound (Z) containing at least one element M selected from the group consisting of Fe, Mn, Co and Ni, by a solid phase reaction;
to produce a phosphate compound (X) having a composition represented by AₐM_{b}PO_{w} (wherein A and M are as defined above, A is derived from the compound (Y), M is derived from the compound (Y) and the compound (Z), a satisfies 0<a<2, b satisfies 0.8<b<1.2, and w is a number which depends on the values of a and b, and the valency of the element M), comprising:
a step of blending the solid particles of the compound (Y) and the compound (Z) in a blend ratio to achieve the phosphate compound (X) to obtain a blended product,
a step of mixing the blended product while pulverizing it to obtain a mixture, and
a step of heating the mixture in an inert gas or in a reducing gas to obtain the phosphate compound (X) by a solid phase reaction.

2. The process for producing a phosphate compound according to Claim 1, wherein the solid particles of the compound (Y) are a crystalline substance.

3. The process for producing a phosphate compound according to Claim 2, wherein the solid particles of the compound (Y) which are a crystalline substance are solid particles obtainable by subjecting solid particles of a compound having a composition represented by A_{z}M_{y}P₃O_{z} to heat treatment in the air or in an oxidizing gas having an oxygen partial pressure of higher than 0.21 and at most 1.0.

4. The process for producing a phosphate compound according to Claim 1, wherein the solid particles of the compound (Y) are an amorphous substance.

5. The process for producing a phosphate compound according to Claim 4, wherein the solid particles of the compound (Y) which are an amorphous substance are solid particles obtainable by cooling a melt of a compound having a composition represented by AₓM_{y}P₃O_{z} at a cooling rate of from -100 °C/sec to -1×10¹⁰ °C/sec.

6. The process for producing a phosphate compound according to any one of Claims 1 to 5, wherein the solid particles of the compound (Y) are solid particles of a compound having a composition represented by A₃M₂P₃O₁₂.

7. The process for producing a phosphate compound according to any one of Claims 1 to 6, wherein the element A is Li.

8. The process for producing a phosphate compound according to any one of Claims 1 to 7, wherein the compound (Z) is an oxide of the element M.

9. The process for producing a phosphate compound according to any one of Claims 1 to 8, wherein the compound (Z) is at least one member selected from the group consisting of Fe₂O₃, Fe₃O₄ and MnO₂.

10. The process for producing a phosphate compound according to any one of Claims 1 to 9, wherein the blended product contains at least one carbon source selected from the group consisting of an organic compound and a carbon powder.

11. The process for producing a phosphate compound according to Claim 10, wherein the carbon source amount in the blended product is, as the mass as calculated as the carbon amount, from 0.1 to 20 mass% based on the mass of the blended product including the carbon source (provided that the mass of the carbon source is a mass as calculated as the carbon amount).

12. The process for producing a phosphate compound according to any one of Claims 1 to 11, wherein the obtainable phosphate compound (X) is olivine-type crystalline particles.

13. The process for producing a phosphate compound according to any one of Claims 1 to 12, wherein the obtainable phosphate compound (X) is olivine-type crystalline particles having a composition represented by LiFe_{c}Mn_{1-c}PO₄ (wherein 0≦c≦1) or olivine-type crystalline particles having a composition represented by LiFePO₄.

14. A method for producing a cathode for a secondary battery, which comprises obtaining a phosphate compound (X) by the production process as defined in any one of Claims 1 to 13, and using the phosphate compound (X) as a cathode material for a secondary battery to produce a cathode for a secondary battery.

15. A method for producing a secondary battery, which comprises obtaining a cathode for a secondary battery by the production method as defined in Claim 14, and using the cathode for a secondary battery to produce a secondary battery.
